# EUROPEAN PATENT APPLICATION

(11) **EP 4 687 012 A1**
(43) Date of publication of application: **04.02.2026**
(21) Application number: 25193244.8
(22) Date of filing: 31.07.2025
(51) Int. Cl.: G06F 3/01, G04G 9/00, G04G 13/02, G04G 17/04, G04G 17/08, G04G 21/00, G04G 21/04, G06F 3/0362

(54) **STATIONARY DEVICE**

(30) Priority: 02.08.2024 JP 2024128129
(71) Applicant: Nintendo Co., Ltd., Kyoto 601-8501 (JP)
(72) Inventor: AKAMA, Tetsuya, Kyoto 601-8501 (JP); WAKITANI, Noboru, Kyoto 601-8501 (JP); SHINOHARA, Kenta, Kyoto 601-8501 (JP); ABE, Rui, Kyoto 601-8501 (JP); KONDO, Masahiro, Kyoto 601-8501 (JP); OSUGA, Seiya, Kyoto 601-8501 (JP); MATSUDA, Yuki, Kyoto 601-8501 (JP); INOUE, Fumihiko, Kyoto 601-8501 (JP); TAKATORI, Junichi, Kyoto 601-8501 (JP); ZENRI, Yuko, Kyoto 601-8501 (JP); SUETAKE, Fumiyoshi, Kyoto 601-8501 (JP)
(74) Representative: Bardehle Pagenberg Partnerschaft mbB Patentanwälte Rechtsanwälte

(57) **Abstract**

A stationary device 1 having a display 5 includes: a body 10 in which the display is provided so as to be viewable from the front; an user-operable part 31 configured to emit light, provided in an upper region of the body; a non-contact sensor 21 configured to detect an object without physical contact, provided in a front part of the body; an optical sensor 22 configured to detect light, provided below the non-contact sensor in the front part of the body; and a controller 40 which receives output signals of the non-contact sensor and the optical sensor. The controller controls a function of the stationary device based on the output signal of the non-contact sensor, and controls the brightness of the display based on the output signal of the optical sensor.

## Description

### FIELD

The present disclosure relates to a stationary device.

### BACKGROUND AND SUMMARY

Alarm clocks provided with a light emitter activated when an audio device sounds are conventionally known.

Providing a stationary device such as an alarm clock with a plurality of sensors in addition to a light emitter has been considered. In such cases, there is room for improvement in facilitating the performance of each sensor.

The following embodiments are provided as non-limiting examples.
(1) A stationary device having a display, the stationary device comprising:
   a body in which the display is provided so as to be viewable from the front;
   an user-operable part configured to emit light, provided in an upper region of the body;
   a non-contact sensor configured to detect an object without physical contact, provided in a front part of the body;
   an optical sensor configured to detect light, provided below the non-contact sensor in the front part of the body; and
   a controller which receives output signals of the non-contact sensor and the optical sensor,
   wherein
   the controller controls a function of the stationary device based on the output signal of the non-contact sensor, and controls the brightness of the display based on the output signal of the optical sensor.
(2) The stationary device according to above (1), wherein the optical sensor and the non-contact sensor are arranged in the horizontal center of a front surface of the body.
(3) The stationary device according to above (1) or (2), wherein the optical sensor is arranged below the display in the front part of the body, and the non-contact sensor is arranged above the display in the front part of the body.
(4) The stationary device according to above (3), wherein
   the display is rectangular,
   the body has, on the front surface thereof, an annular outer frame which extends along an outer periphery of the body, and an enclosure part provided between the display and the outer frame which surrounds the display, and
   the optical sensor and the non-contact sensor are arranged so as to be overlapped by the enclosure part when viewed from the front.
(5) The stationary device according to above (3), wherein
   the display is rectangular,
   the body has a circular cover arranged on the front surface of the display, the circular cover extending outward from an outer periphery of the display, and
   the optical sensor and the non-contact sensor are arranged so as to be overlapped by the cover when viewed from the front.
(6) The stationary device according to any one of above (1) to (5), wherein the body is configured such that a part of the body is positioned on a line segment connecting an arbitrary point of the user-operable part and the optical sensor.
(7) The stationary device according to above (6), wherein the body has a protruding part on a periphery of the front surface of the body above the optical sensor, and the protruding part protrudes forward or upward relative to a portion of the body around the protruding part.
(8) The stationary device according to above (6) or (7), wherein the user operable part is arranged above the body and rearward of the optical sensor.
(9) The stationary device according to any one of above (1) to (8), wherein the controller controls light emission of the user-operable part based on the output signal of the non-contact sensor.
(10) The stationary device according to above (9), wherein the controller is configured to:
   pre-set a region within a detection range of the non-contact sensor; and
   change a light emission pattern of the user-operable part when an output signal of the non-contact sensor indicates that an object has moved from within the region to outside the region.
(11) The stationary device according to any one of above (1) to (10), wherein when an illuminance in front of the stationary device is below a predetermined threshold based on the output signal of the optical sensor, the control part brightens the display in a case the output signal of the non-contact sensor indicates relatively large movement of the object, as compared to when the output signal of the non-contact sensor indicates relatively small movement or no movement of the object.
(12) The stationary device according to any one of above (1) to (11), wherein
   the body further comprises a cover which is arranged on a front surface of the display, the cover extending outwards from an outer periphery of the display, and
   the cover comprises a first coating layer applied such that regions corresponding to the display and the optical sensor are open, and a second coating layer applied to a region corresponding to the optical sensor, the second coating layer having a higher transmittance for infrared lights and certain frequencies of visible lights than the first coating layer.

### BRIEF DESCRIPTION OF DRAWINGS

Embodiments of the present disclosure are best understood from the following detailed description when read with the accompanying figures. It is noted that, in accordance with the standard practice in the industry, various features are not drawn to scale. In fact, the dimensions of the various features may be arbitrarily increased or reduced for clarity of discussion.
FIG. 1 is a perspective view schematically showing a stationary device.
FIG. 2 is a cross-sectional view of the stationary device as viewed from the right.
FIG. 3 is a front view of the stationary device.
FIG. 4 is a view showing six surfaces of the stationary device.
FIG. 5 is a view schematically showing the configuration of a cover.
FIG. 6 is an enlarged cross-sectional view of an upper front part of a body, taken along the same cross section as FIG. 2.
FIG. 7 is an enlarged cross-sectional view of a lower front part of the body, taken along the same cross section as FIG. 2.
FIG. 8 is an enlarged cross-sectional view of an operation assembly, taken along the same cross section as FIG. 2.
FIG. 9 is an exploded perspective view of the operation assembly.
FIG. 10 is a block diagram schematically showing a configuration of electronic components of the stationary device.
FIG. 11 is a view schematically showing a detection range of a non-contact sensor when a stationary device is arranged next to a bed on which a user is sleeping.

### DESCRIPTION OF EMBODIMENTS

The embodiments will be described in detail below with reference to the drawings. In the following description, identical constituent elements have been assigned the same reference signs.

### Overall Configuration

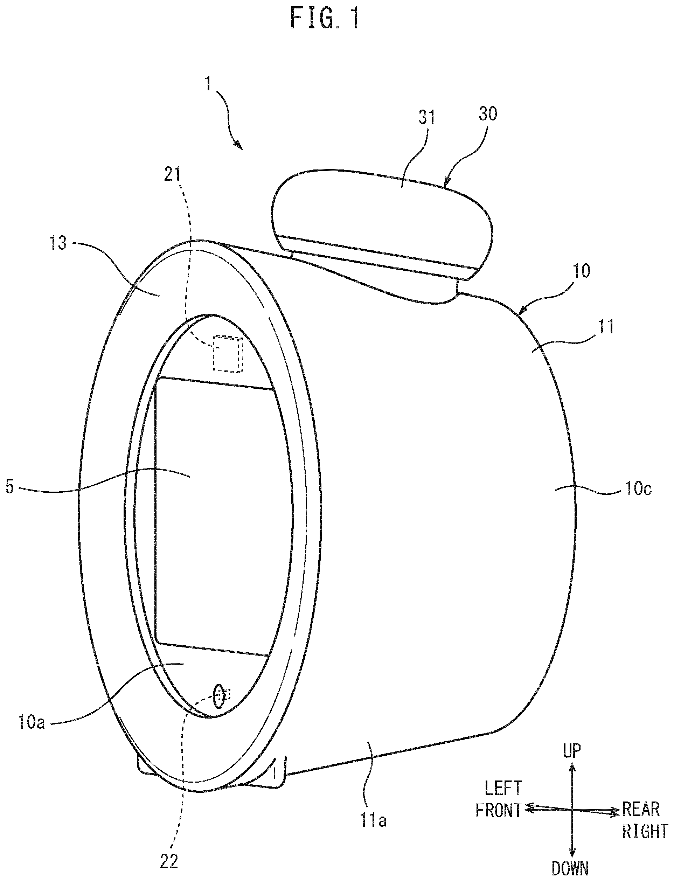

A stationary device 1 according to an embodiment will be described with reference to FIGS. 1 to 4. The stationary device 1 is a device which is arranged and used on an installation surface such as a table, a floor, or a shelf. The stationary device 1 is a device having a display. Specifically, the stationary device 1 is, for example, a desk clock, a music player, a television, a game device, a smartphone, a tablet PC, or a monitor device.

In the present embodiment, the stationary device 1 is a desk clock including a rectangular display 5. Thus, the current time is displayed on the display 5 of the stationary device 1. The current time may be displayed in any display form, such as numbers, hour and minute hands, or an image corresponding to the time. The current time may be displayed by physical hour and minute hands superimposed on the display 5. The shape of the display 5 may be any shape, such as a quadrangle other than a rectangle (trapezoid, parallelogram, etc.), a polygonal shape, or an elliptical shape.

In the present description, the direction in which the display 5 is provided with respect to the stationary device 1 arranged on the installation surface is referred to as the front, and the direction opposite to the direction in which the display 5 is provided is referred to as the rear. A user can view the contents displayed on the display 5 at least from the front. The upward, downward, left, and right directions when the display 5 of the stationary device 1 arranged on the installation surface is viewed from the front side are respectively referred to as the upward, downward, left, and right directions of the stationary device 1.

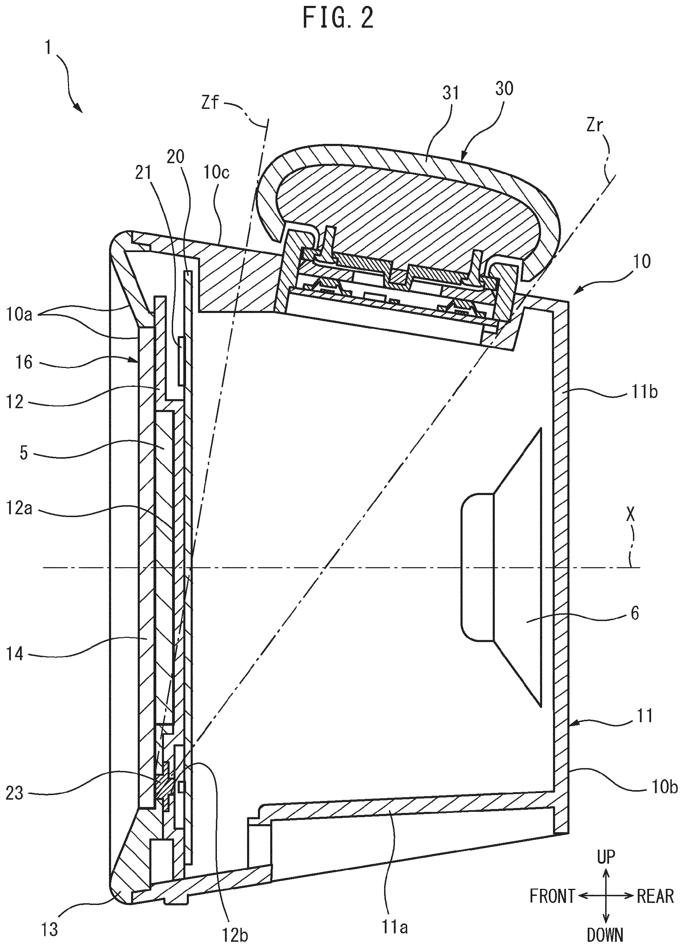

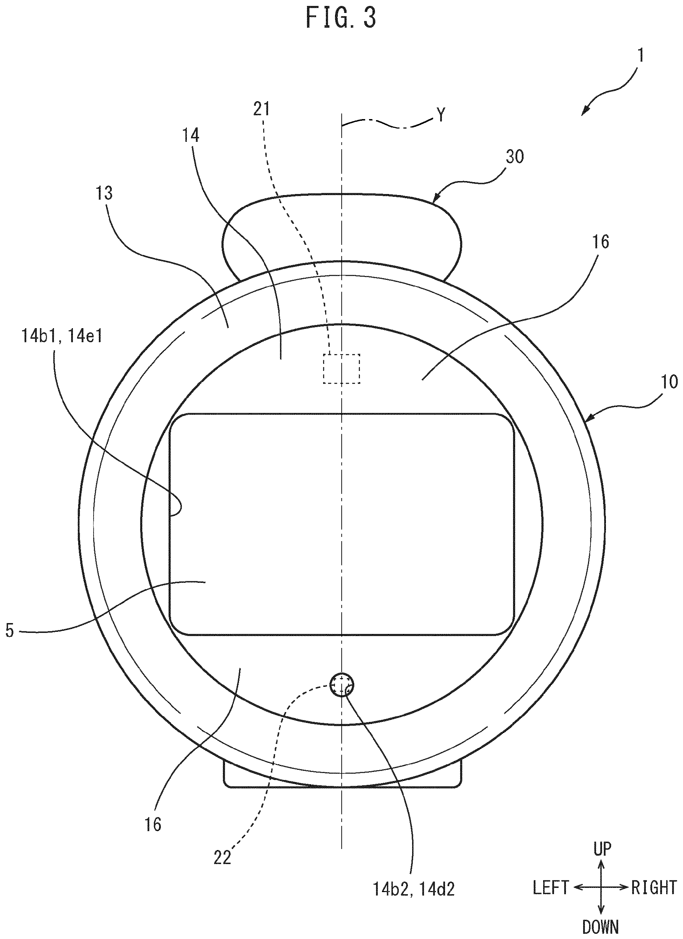

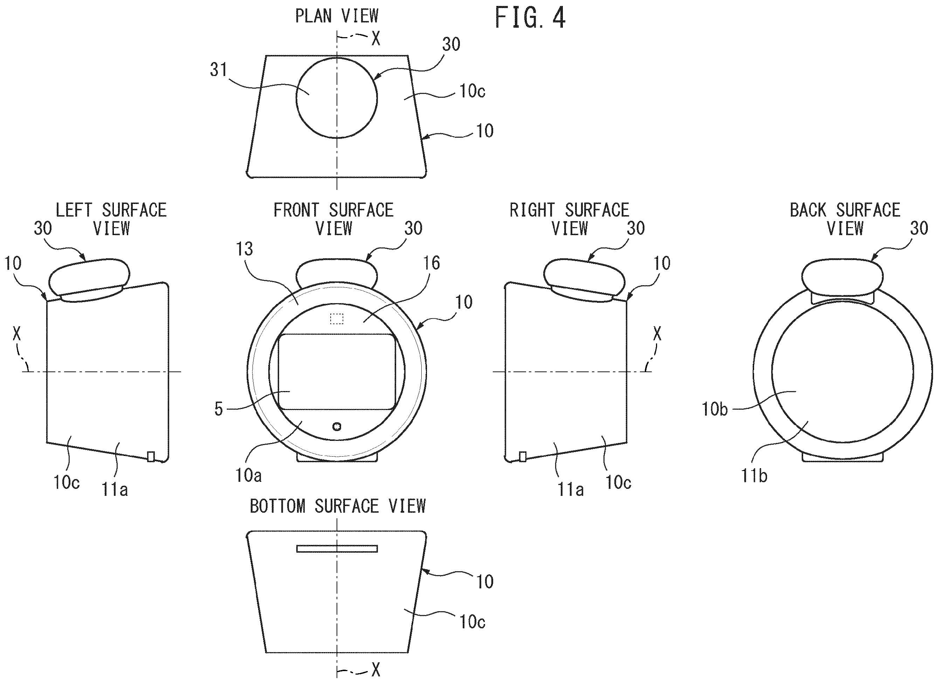

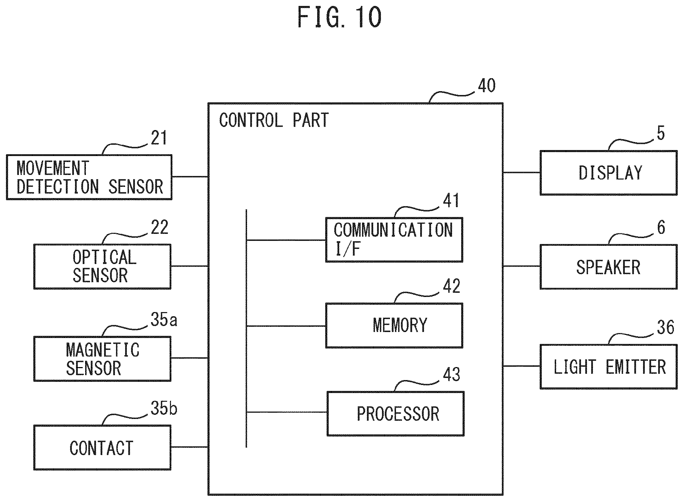

FIG. 1 is a perspective view schematically showing the stationary device 1. FIG. 2 is a cross-sectional view of the stationary device 1 as viewed from the right side along a plane Y of FIG. 3, which will be described later. FIG. 3 is a front view of the stationary device 1. FIG. 4 is a six-sided view of the stationary device 1. As shown in FIGS. 1 to 4, the stationary device 1 includes a body 10 including a display 5, and an operation assembly 30 provided in an upper region of the body 10. In particular, the operation assembly 30 (and in particular, user-operable part 31) is arranged so as to be positioned so as to overlap the body 10 when viewed from above. The body 10 houses a substrate 20 on which a non-contact sensor 21 and an optical sensor 22 are mounted, a control part 40 (refer to FIG. 10), and a speaker 6.

### Configuration of Body

The body 10 is a box-shaped member which houses electronic components. In the present embodiment, the body 10 is made of resin. As shown in FIGS. 1 and 2, in the present embodiment, the body 10 has a circular front surface 10a, a circular rear surface 10b provided on the side opposite of the front surface 10a, and a substantially cylindrical side surface 10c configured to connect the front surface 10a and the rear surface 10b between the front surface 10a and the rear surface 10b. In particular, in the present embodiment, the rear surface 10b is formed into a circle having a smaller diameter than the front surface 10a, and thus, the body 10 is formed such that the cross-sectional area gradually decreases from the front to the rear. In other words, the side surface 10c of the body 10 is formed into a truncated cone shape having cross-sectional area which decreases from the front to the rear.

The body 10 may have any shape as long as the display 5 is provided so as to be visible in one surface of the body 10. Thus, the body 10 may have any three-dimensional shape, such as a rectangular parallelepiped or semi-cylindrical shape.

As shown in FIG. 2, the body 10 includes a housing 11, a support member 12 for supporting the display 5, an outer frame 13 which extends along the outer periphery of the housing 11 in front of the housing 11, and a cover 14 arranged on the front surface (display surface) of the display 5.

The housing 11 has a substantially cylindrical (or truncated conical) sidewall 11a and a disk-shaped rear wall 11b. The sidewall 11a is configured such that axis X (the same as the axis X of the body 10) thereof extends substantially in the front-rear direction. In particular, in the present embodiment, the sidewall 11a is configured such that axis X is slightly inclined downward toward the rear. The rear wall 11b is connected to the sidewall 11a so as to close the rear of the sidewall 11a. The outer surface of the sidewall 11a constitutes the side surface 10c of the body 10, and the rear surface of the rear wall 11b constitutes the rear surface 10b of the body 10. Electronic components such as the speaker 6, the control part 40, and the substrate 20 are accommodated in the housing 11.

In the present embodiment, the support member 12 is a plate-like member formed of an opaque resin and formed into a substantially circular shape. The support member 12 is arranged in front of the sidewall 11a of the housing 11. In particular, in the present embodiment, the support member 12 is arranged so as to occlude the front of the sidewall 11a of the housing 11.

The support member 12 has, on the front surface thereof, a groove part 12a which is recessed backward. The display 5 is arranged in this groove part 12a. The groove part 12a is formed into a rectangle the long sides of which extend in the left-right direction. Thus, in the present embodiment, as shown in FIG. 3, the display 5 is formed into a rectangle the long sides of which extend in the left-right direction when viewed from the front.

The support member 12 has a through hole 12b penetrating in the front-rear direction below the groove part 12a. In the present embodiment, the through hole 12b is arranged in the center of the support member 12 in the left-right direction, and thus, in the center of the front surface 10a of the body 10 in the left-right direction (the same position as openings 14b2, 14d2 of FIG. 3). In the present embodiment, the through hole 12b is arranged in the center between the display 5 and the outer frame 13 in the up-down direction as shown in FIG. 3, and is formed in a substantially circular shape (the through hole 12b is arranged in the same position as the openings 14b2, 14d2 of FIG. 3, and is formed in the same shape as the openings 14b2, 14d2). However, the through hole 12b may be formed in any position and in any shape as long as it is formed in a position corresponding to the arrangement position of the optical sensor 22, which will be described later.

The outer frame 13 is an annular member extending in front of the housing 11 along the outer periphery of the housing 11. The outer frame 13 is arranged around the support member 12 so as to surround the support member 12. Thus, the outer frame 13 extends along the outer periphery of the body 10 at the front surface 10a of the body 10. The outer frame 13 is attached to the front of the sidewall 11a of the housing 11 and is connected to the support member 12. Thus, the outer frame 13 affixes the support member 12 to the housing 11.

In the present embodiment, the outer frame 13 protrudes forward over the entire circumference from the front surface of the cover 14 constituting the front surface 10a of the body 10. In particular, in the present embodiment, as shown in FIG. 2, the front surface of the outer frame 13 is formed so as to protrude forward as it extends radially outward. Thus, the outer frame 13 constitutes a protruding part which protrudes forward with respect to the portion of the body 10 around the outer frame 13 (such as the cover 14), and thus, the protruding part is provided on the periphery of the front surface 10a of the body 10.

In the present embodiment, the housing 11, the support member 12, and the outer frame 13 are configured as separate bodies. However, these components may be integrally formed in part or in entirety. For example, the support member 12 and the outer frame 13 may be integrally formed, or the sidewall 11a of the housing 11 and the outer frame 13 may be integrally formed.

The cover 14 is a substantially circular plate-like member, and is primarily formed of a transparent or translucent resin. The cover 14 is arranged in front of the support member 12 and the display 5 so as to cover the support member 12 and the display 5. Thus, the cover 14 extends from the outer periphery of the display 5 to the outside of the display 5 (in a direction perpendicular to the front-rear direction). Thus, the cover 14 is configured so as to overlap the display 5 and extend to the outside of the display 5 when viewed from the front. In the present embodiment, the cover 14 is arranged on the front surface of the support member 12 and on the front surface of the display 5 so as to be in contact with these front surfaces. Thus, the front surface of the cover 14 constitutes the front surface 10a of the body 10.

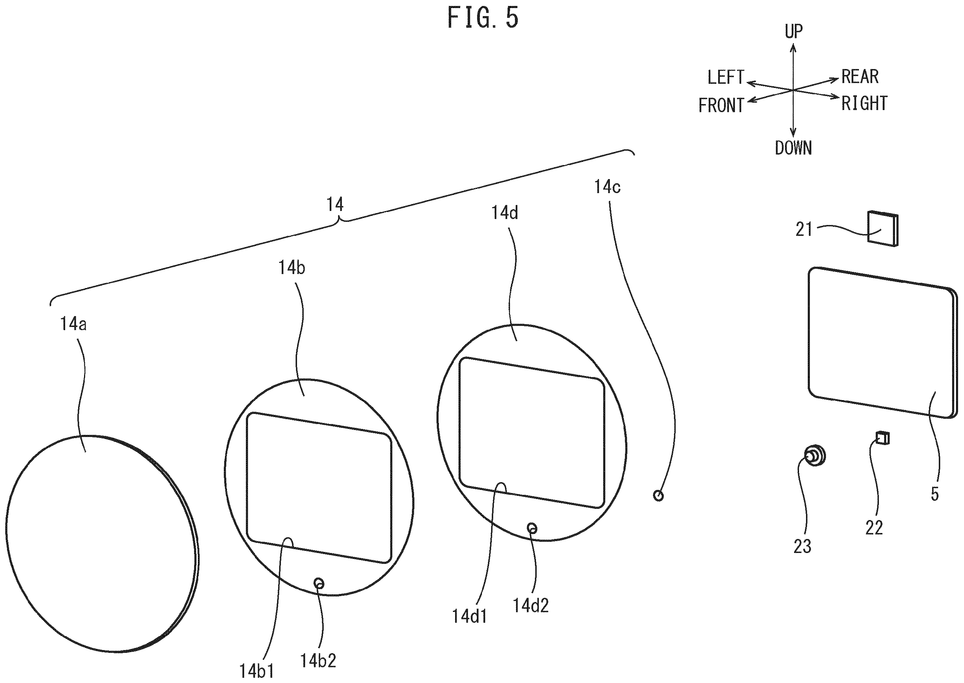

FIG. 5 is a view schematically showing the configuration of the cover 14. As shown in FIG. 5, the cover 14 includes a round plate 14a made of transparent or semi-transparent resin and a plurality of coating layers 14b to 14d. The round plate 14a may be a polarizing plate which allows only light with a certain oscillation direction to pass, or may be a plate without a polarization function. The round plate 14a may also be a light guide plate.

As shown in FIG. 5, the first coating layer 14b is a layer formed of black paint with low light transmittance, and is applied to the surface (rear surface) of the round plate 14a on the display 5 side (rear). The first coating layer 14b has a first opening 14b1 in a region corresponding to the display 5 (a region overlapping the display 5 when viewed from the front). The first coating layer 14b has a second opening 14b2 in a region corresponding to the through hole 12b (optical sensor 22) (a region overlapping the through hole 12b or the optical sensor 22 when viewed from the front). The color of the first coating layer 14b is not limited to black as long as it has low light transmittance.

The third coating layer 14d is a layer formed of white paint, and is applied behind the first coating layer 14b so as to overlap the first coating layer 14b. The third coating layer 14d, in the same manner as the first coating layer 14b, has a first opening 14d1 in a region corresponding to the display 5, and a second opening 14d2 in a region corresponding to the through hole 12b (optical sensor 22). The black first coating layer 14b is formed in front of the white third coating layer 14d such that that the black coloring is aesthetically pleasing when viewed from the front.

The second coating layer 14c is a layer formed of a paint having a higher transmittance for infrared rays or visible light of some frequencies than the first coating layer 14b, and is applied to the rear surface of the round plate 14a. Conversely, the second coating layer 14c is formed of a paint having a lower transmittance for visible light of other frequencies than the infrared rays or visible light of some frequencies described above, for example, a transmittance similar to that of the first coating layer 14b. In particular, the second coating layer 14c is formed in a region corresponding to the through hole 12b (optical sensor 22). Thus, the second coating layer 14c is formed in the opening 14b2 formed in the first coating layer 14b, or in the opening 14d2 formed in the third coating layer 14d, or both.

In FIG. 3, the openings 14b2, 14e2 are drawn so as to be visible in the region corresponding to the through hole 12b (optical sensor 22) when viewed from the front. However, since the second coating layer 14c having a low transmittance of visible light of some frequencies is provided, the opening corresponding to the through hole 12b formed in the first coating layer 14b is difficult to be seen when the user views from the front, and therefore the user is prevented from unnecessarily recognizing that the optical sensor 22 is provided. Conversely, since the transmittance of infrared rays or visible light of some frequencies is high, the optical sensor 22 can detect light around the stationary device 1.

Though the first coating layer 14b to the third coating layer 14d are provided behind the round plate 14a in the present embodiment, they may be provided in front of the round plate 14a. When the display 5 itself is provided with a polarizing plate, a plate-like member having no polarization function may be used instead of the round plate 14a. At least some of the first coating layer 14b to the third coating layer 14d may not be provided.

In the present embodiment, the support member 12 and the cover 14 extend between the display 5 and the outer frame 13 while overlapping each other. The support member 12 and the cover 14 between the display 5 and the outer frame 13 constitute an enclosure part 16 which is provided between the display 5 and the outer frame 13, and surrounds the display 5. In the present embodiment, the support member 12 is configured so as to overlap the entire cover 14 when viewed from the front, and thus, the enclosure part 16 is constituted by both the support member 12 and the cover 14. However, the support member 12 may be provided only partially between the display 5 and the outer frame 13, in which case most of the enclosure part 16 will be constituted by the cover 14.

The cover 14 may not be provided. In this case, the display 5 and the support member 12 constitute the front surface of the body 10. In this case, the enclosure part 16 is constituted by only the support member 12.

### Configuration of Substrate and Sensor

The substrate 20 is a member housed in the body 10 and on which various electronic components are mounted. In the present embodiment, as shown in FIG. 2, the substrate 20 is arranged in a region close to the front surface 10a of the body 10, and specifically, in the front part of the body 10. In the present embodiment, the substrate 20 is arranged immediately behind the front surface 10a of the body 10. Specifically, the substrate 20 is arranged immediately behind the support member 12 and attached to the support member 12. As shown in FIG. 2, in the present embodiment, the substrate 20 is arranged so as to extend in a direction perpendicular to the front-rear direction, and specifically, so as to extend parallel to the front surface 10a of the body 10. As shown in FIG. 2, the non-contact sensor 21 and the optical sensor 22 are mounted on the substrate 20.

The non-contact sensor 21 is a sensor for detecting the surroundings of the stationary device 1, and in particular, an object in front of the stationary device 1 in a non-contact manner. For example, the non-contact sensor 21 is a sensor for detecting the presence or absence of an object in front of the stationary device 1 and, when an object is present, the position thereof. In the present embodiment, the non-contact sensor 21 is a millimeter wave sensor which transmits millimeter wave signals and receives signals reflected by surrounding objects, and detects the positions of surrounding objects based on the transmitted signals and the received signals. The non-contact sensor 21 detects that a surrounding object has moved when the position of the object around the stationary device 1 changes over time. Note that such detection of the position or movement of an object based on the detection result of the non-contact sensor 21 may be performed by the control part 40 which receives the output signal of the non-contact sensor 21, rather than by the non-contact sensor 21 itself.

The non-contact sensor 21 may be any sensor as long as it can detect an object in a non-contact manner. Thus, the non-contact sensor 21 is not limited to a millimeter wave sensor, and may be, for example, an infrared sensor, an ultrasonic sensor, a Doppler sensor, visible optical sensor, or a temperature sensor. The visible optical sensor is a sensor which has a light projector and detects the position of an object based on the reflected wave of light projected from the light projector. The temperature sensor is a sensor that detects the temperature of objects around the stationary device 1, and detects the movement of surrounding objects when, for example, a high-temperature region moves.

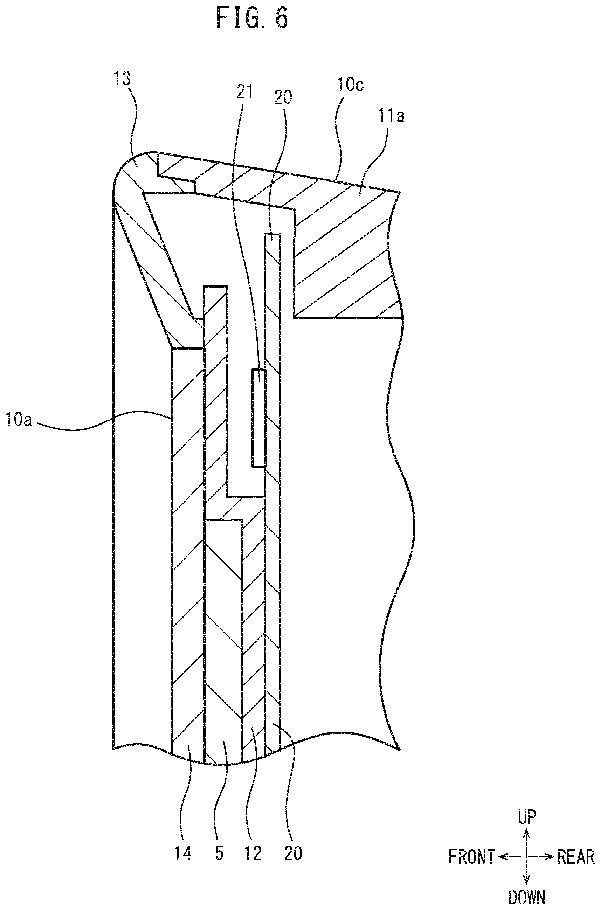

FIG. 6 is an enlarged cross-sectional view of the same cross section as FIG. 2, in which the upper front part of the body 10 is enlarged. As shown in FIG. 6, the non-contact sensor 21 is arranged on the front surface of the substrate 20. Thus, the non-contact sensor 21 is arranged on the front part of the body 10. The non-contact sensor 21 is arranged above the display 5 and below the outer frame 13. Thus, the non-contact sensor 21 is arranged such that the support member 12 and the cover 14 are positioned in front thereof. Specifically, the non-contact sensor 21 is arranged so that it overlaps with the support member 12 and the cover 14, and in particular, the enclosure part 16, when viewed from the front. The non-contact sensor 21 transmits and receives millimeter waves through the support member 12 and the cover 14 arranged in front thereof. The non-contact sensor 21 detects the movement of an object positioned within a predetermined angular range centered on the direction toward the front from the non-contact sensor 21.

In FIG. 3, the position where the non-contact sensor 21 is provided when viewed from the front is indicated by a dashed line. As can be seen from FIG. 3, the non-contact sensor 21 is arranged in the center (not necessarily exactly in the center, but including a position near the center) in the left-right direction of the front surface 10a of the body 10 when viewed from the front. In the present embodiment, the non-contact sensor 21 is arranged so as to intersect with a plane Y passing through the axis X of the body 10 and extending in the up-down direction.

The optical sensor 22 is a sensor for detecting light around the stationary device 1. In particular, the optical sensor 22 is an illuminance sensor for detecting illuminance in front of the stationary device 1. However, the optical sensor 22 may be any sensor as long as it can detect the light intensity and/or color of light around the stationary device 1, or the light intensity and/or color of light in a specific region around the stationary device 1. The optical sensor 22 may be capable of detecting the light intensity continuously, or may be capable of detecting it in two or more stages.

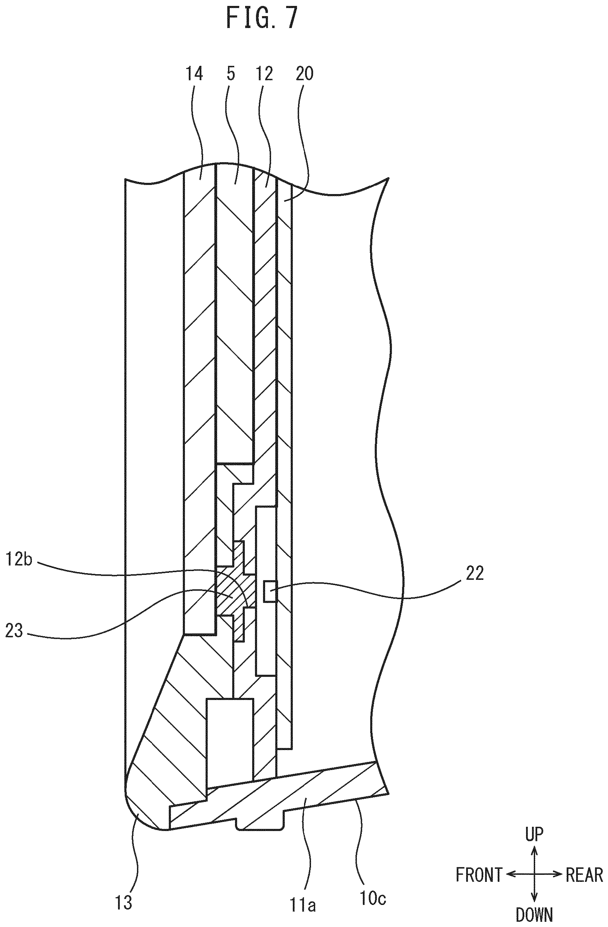

FIG. 7 is an enlarged cross-sectional view of the same cross section as FIG. 2, in which the lower front part of the body 10 is enlarged. As shown in FIG. 7, the optical sensor 22 is arranged on the front surface of the substrate 20. Thus, the optical sensor 22 is arranged in the front part of the body 10. The optical sensor 22 is arranged below the display 5 and above the outer frame 13. Thus, the optical sensor 22 is arranged such that the cover 14 is positioned in front thereof. Specifically, the optical sensor 22 is arranged so as to overlap the cover 14, and in particular, the enclosure part 16, when viewed from the front. The optical sensor 22 is arranged below the non-contact sensor 21.

In FIG. 3, the position where the optical sensor 22 is provided when viewed from the front is indicated by a dashed line. As can be seen from FIG. 3, the optical sensor 22 is arranged in the center (not necessarily exactly in the center, including the vicinity of the center) in the left-right direction of the front surface 10a of the body 10 when viewed from the front. In the present embodiment, the optical sensor 22 is arranged so as to intersect with the plane Y passing through the axis X of the body 10 and extending in the up-down direction. In particular, in the present embodiment, the optical sensor 22 is arranged in a position that overlaps with the second opening 14b2 of the first coating layer 14b and the second opening 14d2 of the third coating layer 14d when viewed from the front.

The optical sensor 22 is arranged at a position overlapping the through hole 12b of the support member 12 when viewed from the front. As shown in FIG. 5, in the present embodiment, a light guide lens 23 is provided in front of the optical sensor 22 and in the through hole 12b. The light guide lens 23 has a front end facing the cover 14 and a rear end facing the optical sensor 22. The light guide lens 23 collects light in a wide angular range in front of the stationary device 1 at the front end thereof and directs the collected light to the light sensor 22. Thus, the front end of the light guide lens 23 functions as a light collecting part for the optical sensor 22. When the light guide lens 23 is not provided, the front end of the optical sensor 22 may function as a light collecting part for the optical sensor 22.

In the present embodiment, the light collecting part (front surface of the light guide lens 23) for the optical sensor 22 and the body 10 are configured so that a part of the body 10 is positioned on a line segment connecting the light collecting part and an arbitrary point of an user-operable part 31, which will be described later, of the operation assembly 30. FIG. 2 shows a line segment Zf that extends most forward and a line segment Zr that extends most rearward among such line segments. Both of these line segments Zf, Zr intersect with the components constituting the body 10. By positioning a part of the body 10 on the line segment connecting the light collecting part and the user-operable part 31, the effect of light emission from the user-operable part 31 on the optical sensor 22 can be suppressed.

In the present embodiment, the non-contact sensor 21 and the optical sensor 22 are mounted on the same substrate 20. However, the non-contact sensor 21 and the optical sensor 22 may be mounted on separate substrates. Alternatively, the non-contact sensor 21 and the optical sensor 22 may not be mounted on a substrate, but may be connected to a substrate via wiring.

### Configuration of Operation Assembly

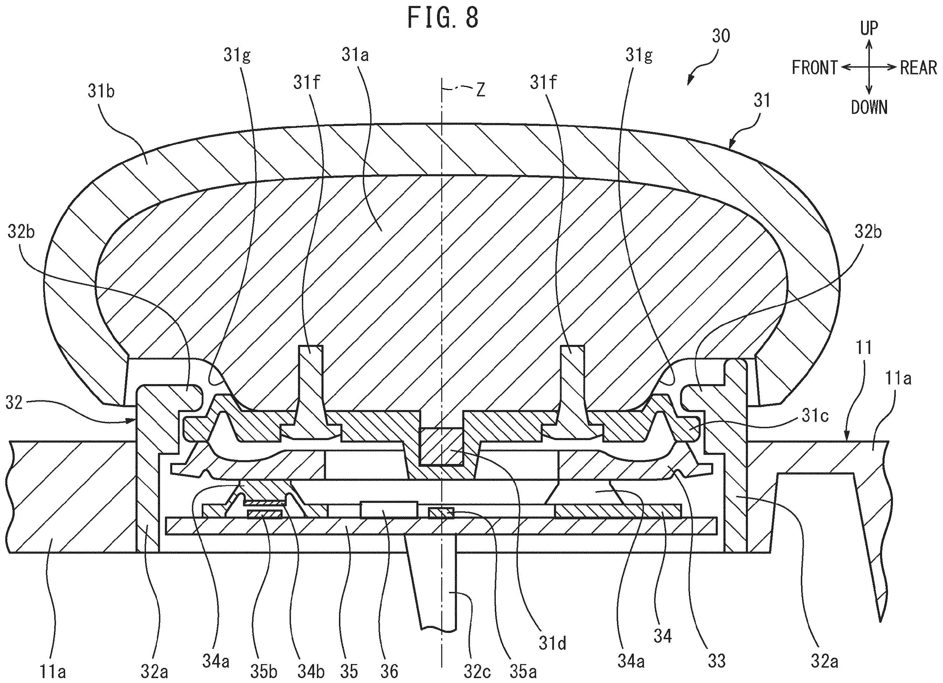

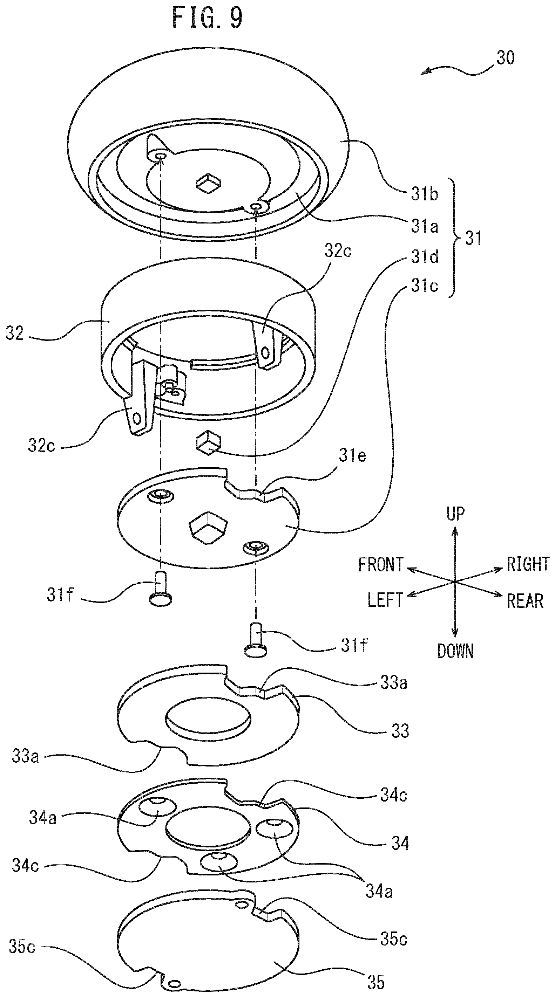

FIG. 8 is an enlarged cross-sectional view of the operation assembly 30 in the same cross section as FIG. 2. FIG. 9 is an exploded perspective view of the operation assembly 30. The operation assembly 30 is for a user to operate various functions of the stationary device 1. Thus, when a user performs an operation such as pushing, pulling, tilting, touching, or rotating of the user-operable part 31 of the operation assembly 30, the stationary device 1 operates in response to this operation. Specifically, in response to this operation, the display on the display 5 changes, sound is output from the speaker 6, or the light emission mode of the operation assembly 30 changes. The operation assembly 30 is configured such that the user-operable part 31 operated by the user can emit light.

As shown in FIGS. 8 and 9, the operation assembly 30 includes the user-operable part 31, a foundation member 32, an annular member 33, an elastic member 34, and an user-operable part substrate 35. The foundation member 32 is affixed to the upper part of the housing 11, and the user-operable part 31 is attached so as to be rotatable relative to the foundation member 32 and slidable in the direction of an axis Z of the foundation member 32. A light emitter 36 is provided on the user-operable part substrate 35, and the operation assembly 30 is configured such that the user-operable part 31 appears to emit light when the light emitter 36 emits light.

The user-operable part 31 is arranged in an upper region of the body 10, and is arranged so as to be positioned so as to overlap the body 10 when viewed from above, as shown in the plan view of FIG. 4. The user-operable part 31 is arranged rearward of the optical sensor 22, and in particular, the light collecting part for the optical sensor 22. The user-operable part 31 includes an internal member 31a, an outer peripheral member 31b provided so as to surround the internal member 31a above and to the sides, an affixation member 31c attached below the internal member 31a, and a magnet 31d arranged below the center of the internal member 31a.

The internal member 31a is formed of a material that diffuses light. The internal member 31a is formed of a resin that contains a dispersed diffusing agent. When the light emitter 36 emits light and the light is incident on the internal member 31a, the internal member 31a diffuses the light to the surroundings. As shown in FIG. 8, the internal member 31a is formed in a cylindrical shape the center of the upper surface of which expands upward. The outer peripheral member 31b is arranged so as to surround the internal member 31a, and is formed of a hard and transparent resin that can be held by a user. The affixation member 31c is formed of a hard and transparent resin in a circular plate shape. In the present embodiment, the affixation member 31c has a notch 31e that is recessed inward at one location on its outer periphery. The affixation member 31c is affixed below the internal member 31a by a fastener 31f such as a screw. In particular, in the present embodiment, the affixation member 31c is affixed to the internal member 31a such that a groove 31g recessed radially inward is formed by the internal member 31a and the affixation member 31c on the side surface of the user-operable part 31. The magnet 31d is arranged between the central lower surface of the internal member 31a and the central upper surface of the affixation member 31c. In particular, the magnet 31d is arranged such that the magnetic field lines thereof extend in a direction perpendicular to the up-down direction (the axial direction of the user-operable part 31).

The foundation member 32 includes a cylindrical portion 32a, a flange 32b protruding inward from the cylindrical portion 32a, and leg parts 32c protruding inward and downward from the cylindrical portion 32a. The cylindrical portion 32a is affixed to an upper portion of the sidewall 11a of the housing 11 and protrudes substantially upward from the upper surface of the sidewall 11a (i.e., the upper side surface 10c of the body 10). In the present embodiment, the cylindrical portion 32a is formed so that the rear side is higher than the front side in the axis Z direction of the foundation member 32.

Moreover, the flange 32b protrudes inward near the upper end of the cylindrical portion 32a, and the flange 32b fits into the groove 31g formed in the user-operable part 31. As a result, the user-operable part 31 is connected to the foundation member 32 so as to be capable of rotating about the axis of the foundation member 32. Since the vertical thickness of the flange 32b is sufficiently smaller than the vertical width of the groove 31g, the user-operable part 31 can slide in the vertical direction relative to the foundation member 32 (more specifically, in the axial direction of the foundation member 32).

Two leg parts 32c are provided in the cylindrical portion 32a, and are arranged in positions symmetrical to each other with respect to the axis Z of the foundation member 32. The leg parts 32c protrude inward from the inner surface of the cylindrical portion 32a. The leg parts 32c are configured such that the upper ends thereof are positioned lower than the upper end of the cylindrical portion 32a in the direction of the axis Z, and the lower ends thereof protrude downward from the lower end of the cylindrical portion 32a in the direction of the axis Z.

The annular member 33 is arranged inside the cylindrical portion 32a and below the user-operable part 31. In the present embodiment, the annular member 33 has two inwardly recessed notches 33a on its outer periphery. These two notches 33a are arranged in positions symmetrical to each other with respect to the axis Z. The annular member 33 is arranged in the foundation member 32 so that the leg parts 32c are positioned in the notches 33a. The annular member 33 is arranged so that it cannot rotate about the axis Z of the foundation member 32. Thus, when the user-operable part 31 rotates, the lower surface of the affixation member 31c of the user-operable part 31 slides against the upper surface of the annular member 33. The annular member 33 is biased upward by the elastic member 34. Thus, the annular member 33 biases the user-operable part 31 upward such that the upper surface of the affixation member 31c of the user-operable part 31 comes into contact with the lower surface of the flange 32b, as shown in FIG. 8.

The elastic member 34 biases the annular member 33 upward (in the axial direction of the cylindrical portion 32a and in the direction away from the user-operable part substrate 35). In particular, the elastic member 34 is provided between the annular member 33 and the user-operable part substrate 35, and biases the annular member 33 away from the user-operable part substrate 35. Specifically, as shown in FIG. 9, the elastic member 34 has a plurality of protrusions 34a protruding upward in the direction of the axis Z of the foundation member 32. In the present embodiment, three protrusions 34a are provided in the elastic member 34, one of which is provided on the front side of the elastic member 34, and the remaining two protrusions 34a are provided on the rear side of the elastic member 34. These three protrusions 34a bias the annular member 33 away from the user-operable part substrate 35. As a result, when the user-operable part 31 is not being pressed by the user, the upper surface of the affixation member 31c comes into contact with the lower surface of the flange 32b of the foundation member 32.

A plate-shaped conductor 34b is provided on the lower surface of the protrusion 34a. In the present embodiment, the conductor 34b is provided on the lower surface of one protrusion provided on the front side of the elastic member 34. When the user-operable part 31 is not pressed by the user, the lower surface of the protrusion 34a is separated from the upper surface of the user-operable part substrate 35.

The elastic member 34 biases the user-operable part 31 with a force sufficient to move the user-operable part 31 downward when the user-operable part 31 is pressed downward by the user. Thus, when the user-operable part 31 is pressed downward by the user, the user-operable part 31 moves downward and the elastic member 34 is deformed (and in particular, the protrusion 34a is deformed), and as a result, the conductor 34b of the user-operable part 31 provided on the lower surface of the protrusion 34a comes into contact with a contact 35b (which is described later) of the user-operable part substrate 35.

In the present embodiment, the elastic member 34 has two inwardly recessed notches 34c on the outer periphery thereof. These two notches 34c are arranged in positions symmetrical to each other with respect to the axis Z. The annular member 33 is arranged in the foundation member 32 such that the leg parts 32c are positioned in the notches 34c. The elastic member 34 is affixed to the user-operable part substrate 35, and thus, cannot rotate about the axis Z of the foundation member 32.

The user-operable part substrate 35 is a part which is housed in the body 10 and on which various electronic components are mounted. In the present embodiment, the user-operable part substrate 35 is arranged below the elastic member 34 and is affixed to the housing 11 of the body 10. The user-operable part substrate 35 is arranged so as to extend in a direction perpendicular to the axis of the user-operable part 31. As shown in FIG. 8, the user-operable part substrate 35 is provided with a magnetic sensor 35a, contact 35b, and a light emitter 36.

In the present embodiment, the user-operable part substrate 35 has two inwardly recessed notches 35c on the outer periphery thereof. These two notches 35c are arranged at positions symmetrical to each other with respect to the axis Z. The user-operable part substrate 35 is arranged in the foundation member 32 such that the leg parts 32c are positioned in the notches 35c.

The magnetic sensor 35a is a sensor for detecting the direction and magnitude of a magnetic field. The magnetic sensor 35a is arranged on the axis of the user-operable part 31 on the upper surface of the user-operable part substrate 35. Thus, the magnetic sensor 35a is arranged close to the magnet 31d of the user-operable part 31 and detects the direction of the magnetic field lines generated by the magnet 31d. When the user-operable part 31 rotates, the direction of the magnetic field lines generated by the magnet 31d changes. The magnetic sensor 35a can detect the rotation and the angle of the user-operable part 31 by detecting the direction of the magnetic field lines. In particular, in the present embodiment, by utilizing the magnet 31d and the magnetic sensor 35a, the rotation and the angle of the user-operable part 31 can be detected while allowing the user-operable part 31 to move in the axial direction.

The contact 35b is constituted by a metal conductor. The contact 35b is arranged below the conductor 34b of the elastic member 34, and contacts the conductor 34b when the protrusion 34a at the front of the elastic member 34 is deformed. The contact 35b is electrically connected to the control part 40, and is formed such that the electrical signal sent to the control part 40 is different when the conductor 34b and the contact 35b are in contact with each other and when they are not in contact with each other. As described above, when the user-operable part 31 is not pressed by the user, the conductor 34b and the contact 35b are separated, and when the user-operable part 31 is pressed by the user, the conductor 34b and the contact 35b are in contact with each other. Thus, it is possible to determine whether the user-operable part 31 is pressed by the user due to the conductor 34b and the contact 35b.

The light emitter 36 is a device for emitting light according to an electrical signal from the control part. The light emitter 36 is, for example, an LED (light-emitting diode). The light emitter 36 is arranged on the upper surface of the user-operable part substrate 35 below the user-operable part 31. In particular, the light emitter 36 is arranged in a position overlapping the user-operable part 31 when viewed from above. The light emitted from the light emitter 36 arranged in this manner enters the user-operable part 31 through the central opening of the annular member 33 and is diffused in the internal member 31a. As a result, when light is emitted from the light emitter 36, the user-operable part 31 as a whole appears to emit light.

Thus, in the operation assembly 30 of the present embodiment, the cylindrical portion 32a is formed such that the rear side is higher than the front side in the axis Z direction of the foundation member 32. Furthermore, the conductor 34b is provided only in the protrusion 34a at the front of the elastic member 34. Thus, when the user presses the user-operable part 31, the user-operable part 31 moves downward with the rear upper end of the cylindrical portion 32a serving as a fulcrum, the protrusion 34a on the front side of the elastic member 34 is deformed, and the conductor 34b comes into contact with the contact 35b. For example, in the case in which all of the protrusions are provided with a respective conductor and the cylindrical portion is formed at the same height overall in the axis Z direction, when the user presses the user-operable part, the front side of the user-operable part may first go down and then the rear side of the user-operable part may go down depending on the manner in which it is pressed by the user. In this case, the conductor of the front protrusion comes into contact with the contact, and then the conductor of the front protrusion separates from the contact and the conductor of the rear protrusion comes into contact with the contact, which may double the sensation of pressing the user-operable part for the user and cause the user to perform two unintended inputs. In contrast, the present embodiment has the above-mentioned configuration, which prevents the user from feeling double-pressing of the user-operable part and prevents the user from performing two unintended inputs.

In the present embodiment, the annular member 33, the elastic member 34, and the user-operable part substrate 35 are provided with the notches 33a, 34c, and 35c, respectively, such that these members do not interfere with the leg parts 32c. The affixation member 31c is arranged above the leg parts 32c in the direction of the axis Z so that it does not interfere with the leg parts 32c. However, the affixation member 31c has only one notch 31e. As a result, when the affixation member 31c is assembled with the internal member 31a, since the part without the notch 31e is first fitted above one leg part 32c, and then the part with the notch 31e is moved upward along the other leg part 32c, the affixation member 31c can be easily assembled with the internal member 31a. Furthermore, since only one notch 31e is provided in the affixation member 31c, the user experiences a superior sensation when rotating the user-operable part than in the case in which a plurality of notches 31e are provided.

In the present embodiment, the operation assembly 30 is configured so that the user can push in and rotate the user-operable part 31. However, the operation assembly 30 may be configured so that the user can only push in or rotate the user-operable part 31. Alternatively, the operation assembly 30 may be configured so that it cannot be operated by the user. In either case, however, it is necessary that the operation assembly 30 be configured so as to emit light. The operation assembly 30 may be formed in a form different from the above-mentioned form as long as it can emit light. Thus, the operation assembly 30 may not have a light emitter 36, and the user-operable part 31 may be coated with a light-emitting paint. Furthermore, though the user-operable part 31 as a whole emits light in the present embodiment, only a part of it may emit light.

In the present embodiment, the operation assembly 30 is formed so as to be inserted into the upper surface of the body 10. However, the operation assembly 30 may be formed separately from the body 10 and arranged on the upper surface of the body 10 (i.e., on the side surface 10c so that the operation assembly 30 is positioned on the body 10 when the body 10 is viewed from above).

In the present embodiment, the conductor 34b is provided on the underside of only one of the protrusions 34a on the front side. However, the conductor 34b may be provided on any of the protrusions 34a, including the two protrusions 34a on the rear side, and the contact 35b may be provided at a corresponding position on the user-operable part substrate 35. Two or four or more protrusions 34a may be provided on the elastic member 34.

### Configuration of Electronic Components

Next, the configuration of the electronic components of the stationary device 1 will be described with reference to FIG. 10. FIG. 10 is a block diagram schematically showing the configuration of the electronic components of the stationary device 1. As shown in FIG. 10, the stationary device 1 includes the display 5, the speaker 6, the light emitter 36, the non-contact sensor 21, the optical sensor 22, the magnetic sensor 35a, the contact 35b, and the control part 40. The stationary device 1 further includes a battery (not illustrated) for supplying power to the display 5 and the control part 40. Though the display 5, the speaker 6, the light emitter 36, the non-contact sensor 21, the optical sensor 22, the magnetic sensor 35a, the contact 35b, and the control part 40 are housed in the body 10 in the present embodiment, some of them may not be housed in the body 10, and may be housed in, for example, the operation assembly 30.

The display 5 is a device which is electrically connected to the control part 40 for displaying an image in accordance with an image signal from the control part 40. The display 5 displays an image in accordance with a computer program executed by the control part 40. The display 5 is, for example, a liquid crystal display, an EL (electro luminescence) display, or a plasma display.

The speaker 6 is a device that is electrically connected to the control part 40 for outputting sound in accordance with an audio signal from the control part 40. The speaker 6 also outputs sound in accordance with a computer program being executed by the control part 40.

The light emitter 36 is electrically connected to the control part 40 and emits light in response to a control signal or power supply from the control part 40. The light emitter 36 may be configured so as to emit light of a single color, or may be configured to emit light of a number of different colors. The light emitter 36 may also be configured so as to be capable of changing the light emission intensity thereof in a stepwise or continuous manner.

The non-contact sensor 21, the optical sensor 22, the magnetic sensor 35a, and the contact 35b are electrically connected to the control part 40. Output signals from the non-contact sensor 21, the optical sensor 22, the magnetic sensor 35a, and the contact 35b are input to the control part 40. Specifically, an output signal indicating the presence or absence of an object in front of the stationary device 1 and the position thereof is input from the non-contact sensor 21. A signal indicating the illuminance in front of the stationary device 1 is input from the optical sensor 22. Furthermore, a signal indicating the direction and magnitude of the magnetic field is input from the magnetic sensor 35a. A signal indicating whether or not the conductor 34b has come into contact with the contact 35b is input from the contact 35b.

### Configuration and Operation of Control Part

The control part 40 transmits control signals to the display 5, the speaker 6, the light emitter 36, etc., in accordance with the computer program being executed, based on signals received from the non-contact sensor 21, the optical sensor 22, the magnetic sensor 35a, and the contact 35b. The control part 40 includes a communication interface 41, a memory 42, and a processor 43. The communication interface 41, the memory 42, and the processor 43 may be separate circuits, or may be configured as a single integrated circuit.

The communication interface 41 is a circuit for connecting the control part 40 to other electronic components in the body 10. The memory 42 is a storage medium for storing data. The memory 42 includes, for example, a volatile semiconductor memory or a non-volatile semiconductor memory. The memory 42 may include a removable medium such as a memory card or an optical disk. The memory 42 stores the computer programs executed by the processor 43. The memory 42 also stores various data used by the running program, such as an output signal of the non-contact sensor 21, etc.

The processor 43 includes one or more central processing units (CPUs) and peripheral circuits thereof. The processor 43 may further include other arithmetic circuits such as a logic unit or a numerical operation unit. The processor 43 executes various processes based on computer programs stored in the memory 42. For example, the processor 43 executes control processes for the display 5, the speaker 6, and the light emitter 36, and generates and outputs control signals to be output to the display 5, the speaker 6, and the light emitter 36.

The processor 43 controls the functions of the stationary device 1 based on the output signal of the non-contact sensor 21, the output signal of the optical sensor 22, the output signal of the magnetic sensor 35a, and the output signal from the contact 35b.

In the present embodiment, the processor 43 controls several functions of the stationary device 1 based on the output signal of the non-contact sensor 21. For example, the processor 43 controls the light emission of the operation assembly 30 (i.e., the light emission of the light emitter 36), the brightness of the screen of the display 5, the display contents on the display 5, the audio output by the speaker 6, and the like based on the output signal of the non-contact sensor 21. The processor 43 may control only one function of the stationary device 1 based on the output signal of the non-contact sensor 21. The processor 43 may also control only some of the light emission of the operation assembly 30, the brightness of the screen of the display 5, the display contents on the display 5, and the audio output by the speaker 6, or may control functions other than these.

Specifically, for example, the processor 43 may change the light emission mode of the operation assembly 30 when the output signal of the non-contact sensor 21 indicates that an object in front of the stationary device 1 has moved from within a predetermined region to outside the predetermined region. The processor 43 may also change the brightness of the screen of the display 5 based on whether the output signal of the non-contact sensor 21 detects a large movement of the object. For example, when a sound such as an alarm is being output from the speaker 6, if the output signal of the non-contact sensor 21 indicates that an object in front of the stationary device 1 is moving, the processor 43 may stop the sound output from the speaker 6 because it is considered that the person in front of the stationary device 1 has woken up. For example, when an alarm or other sound is being output from the speaker 6, if the output signal of the non-contact sensor 21 continues to indicate that the object in front of the stationary device 1 is not moving at all, the processor 43 may stop the sound output, since it is assumed that there is no person in front of the stationary device 1.

Moreover, the processor 43 controls the brightness of the screen of the display 5 based on the output signal of the optical sensor 22. In the present embodiment, when the output signal of the optical sensor 22 indicates that the surroundings of the stationary device 1 are bright, for example, when the illuminance detected by the optical sensor 22 is high, the processor 43 brightens the screen of the display 5. Conversely, when the output signal of the optical sensor 22 indicates that the surroundings of the stationary device 1 are dark, for example, when the illuminance detected by the optical sensor 22 is low, the processor 43 darkens the screen of the display 5. The output signal of the optical sensor 22 may be the illuminance itself, or may be binary information indicating whether or not the illuminance exceeds a specific reference value.

As long as the processor 43 controls the brightness of the screen of the display 5 based on the output signal of the optical sensor 22, it is not necessary to control the brightness of the screen so as to correspond linearly to the brightness of the surroundings of the stationary device 1. Thus, for example, when the output signal of the optical sensor 22 indicates that the surroundings of the stationary device 1 have suddenly become dark, the processor 43 may gradually darken the screen of the display 5, or may darken the screen of the display 5 after a certain period of time has passed since the surroundings of the stationary device 1 have suddenly become dark. Though the processor 43 controls only the brightness of the screen of the display 5 based on the output signal of the optical sensor 22 in the present embodiment, it may control other than the brightness of the screen of the display 5 based on the output signal of the optical sensor 22. For example, the processor 43 may change the brightness when the operation assembly 30 is caused to emit light based on the output signal of the optical sensor 22.

Furthermore, the processor 43 controls several functions of the stationary device 1 based on the output signal of the magnetic sensor 35a and the output signal from the contact 35b. For example, when the output signal of the magnetic sensor 35a and the output signal from the contact 35b indicate that a predetermined operation is performed with the user-operable part 31, the processor 43 sets the time at which to output a sound such as an alarm from the speaker 6 and stores this in the memory 42. For example, when the output signal of the magnetic sensor 35a and the output signal from the contact 35b indicate that another predetermined operation is performed with the user-operable part 31, the processor 43 sets the color at which the operation assembly 30 is to be illuminated and stores this in the memory 42.

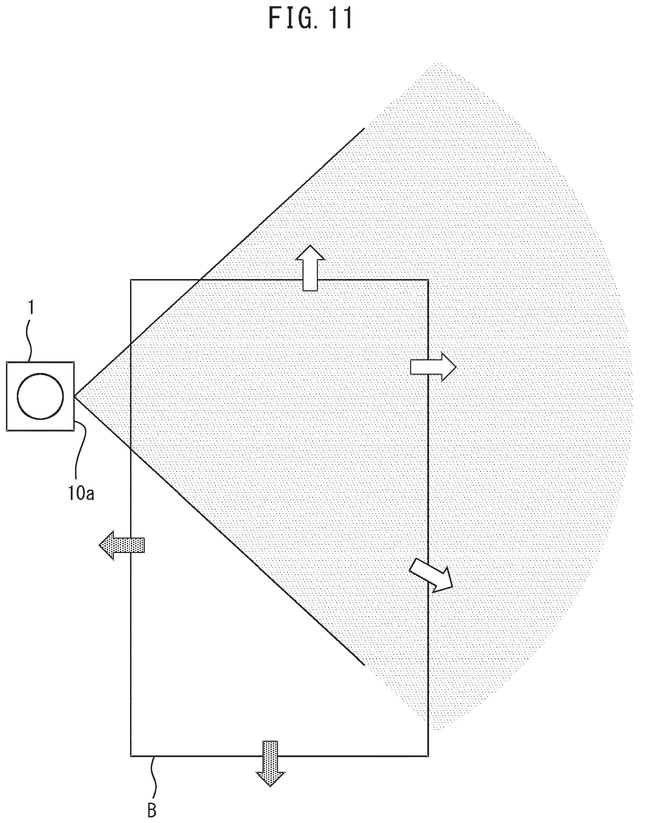

A specific control when the light emission mode of the operation assembly 30 is changed in a case in which the output signal of the non-contact sensor 21 indicates that an object in front of the stationary device 1 has moved from within a predetermined region to outside the predetermined region will be described below with reference to FIG. 11.

First, a method of determining whether an object in front of the stationary device 1 has moved from within a predetermined region to outside the predetermined region, for example, whether a user has moved from within a predetermined bed region to outside the bed region, based on an output signal of the non-contact sensor 21, which is a millimeter wave sensor, will be described. FIG. 11 is a view schematically showing a detection range of the non-contact sensor 21 when the stationary device 1 is installed beside a bed B where a user sleeps. In the example illustrated in FIG. 11, the stationary device 1 is installed beside the bed B such that the front surface 10a of the stationary device 1 faces the bed B. As illustrated in FIG. 11, the detection range of the non-contact sensor 21 covers a certain angular range (the region indicated in gray in the drawing). The non-contact sensor 21 can perform detection up to a distance from the non-contact sensor 21 that sufficiently exceeds the size of a general bed B (the region indicated in gray in the drawing). Thus, the non-contact sensor 21 can detect the movement of an object up to a distance beyond the bed B within this angular range.

In the present embodiment, the processor 43 preliminarily sets, within the detection range of the non-contact sensor 21, a region in which the bed B is positioned, i.e., a region in which the user sleeps, as a predetermined bed region. The processor 43 sets the bed region based on, for example, the operation of the user-operable part 31 of the operation assembly 30 by the user. Alternatively, the processor 43 may set, as the bed region, a region in which the movement of an object is detected (for example, a region in which the movement is detected by the user intentionally moving around on the bed) when the stationary device 1 is set to a bed region detection mode.

As shown in FIG. 11, the case in which the user moves from inside bed B to outside bed B within the detection range of the non-contact sensor 21, and specifically, the case in which the user moves in the directions indicated by the white arrows in FIG. 11, will be considered. In such a case, the output signal of the non-contact sensor 21 indicates that a large movement of the object, indicating that the user has moved, is within a preset bed region, and then changes to indicate that the object is outside the bed region. Thus, when the output signal of the non-contact sensor 21 indicates that the object has moved from inside the bed region to outside the bed region, the processor 43 determines that the output signal of the non-contact sensor 21 indicates that the object in front of the stationary device 1 has moved from inside the predetermined region to outside the predetermined region.

Conversely, as shown in FIG. 11, the case in which the user moves from inside the bed B to outside the bed B outside the detection range of the non-contact sensor 21, and specifically, the case in which the user moves in the directions indicated by the hatched arrows in FIG. 11, will be considered. In such a case, the output signal of the non-contact sensor 21 indicates that there is no movement of the object outside the bed region. Conversely, when the user is on the bed B, the output signal of the non-contact sensor 21 indicates that there is a small movement, such as a movement caused by the user breathing. However, when the user moves in the directions indicated by the hatched arrows, the output signal of the non-contact sensor 21 indicates that there is not even a small movement after the user moves. Thus, in the present embodiment, when it is detected from the output signal of the non-contact sensor 21 that there has not been even a small movement of the object in the bed region for a predetermined reference time after a large movement has occurred in the bed region, the processor 43 judges that the object in front of the stationary device 1 has moved from inside the predetermined region to outside the predetermined region.

In the present embodiment, when the output signal of the non-contact sensor 21 indicates that an object in front of the stationary device 1 has moved from within the predetermined region to outside the predetermined region, the processor 43 causes the operation assembly 30 to emit light in a predetermined color for a predetermined time. As a result, the user can confirm that the stationary device 1 recognizes that the user has left the bed B.

When the output signal of the non-contact sensor 21 indicates that an object in front of the stationary device 1 has moved from within the predetermined region to outside the predetermined region, the processor 43 may emit light in any light emission mode as long as the light emission mode of the operation assembly 30 is changed to a mode different from the light emission mode in such a case. Thus, for example, in such a case, the processor 43 may cause the operation assembly 30 to blink, or may cause the operation assembly 30 to emit light so that the color gradually changes. Furthermore, if the operation assembly 30 had been emitting light up until that point, the processor 43 may stop the operation assembly 30 from emitting light.

Next, control of the brightness of the screen of the display 5 based on the output signal of the non-contact sensor 21 and the output signal of the optical sensor 22 will be described. The processor 43 brightens the screen of the display 5 as the illuminance detected by the optical sensor 22 increases. As a result, the user can more easily see the screen of the display 5, regardless of the brightness around the stationary device 1.

Furthermore, the processor 43 changes the brightness of the screen of the display 5 depending on whether the output signal of the non-contact sensor 21 indicates that the object is moving in the bed region. When the output signal of the non-contact sensor 21 indicates that the object is moving significantly, the screen of the display 5 is brightened compared to when the output signal of the non-contact sensor 21 indicates that the object is not moving significantly. In this manner, when the user is active in front of the stationary device 1, the screen of the display 5 is brightened, improving visibility for the user. Conversely, when the user in front of the stationary device 1 is sleeping or there is no user in front of the stationary device 1, the display 5 is darkened, so that the screen of the display 5 is prevented from becoming too bright during sleep of the user, disturbing the sleep of the user, or increasing power consumption unnecessarily.

Furthermore, when the illuminance detected by the optical sensor 22 is equal to or greater than a predetermined illuminance, the brightness of the screen of the display 5 need not be changed depending on whether or not the object is moving significantly. This prevents a situation in which, when the surroundings of the stationary device 1 are bright, a moving hand covers the optical sensor 22, causing the screen to become dark and making it difficult for the user to distinguish the display content.

In the present embodiment, the brightness of the screen of the display 5 is changed when a large movement of the object is not detected and when a large movement of the object is detected. However, for example, if a large movement of the object has not been detected for a certain period of time, the screen of the display 5 is brightened when the large movement of the object is detected. However, if the period during which the large movement of the object has not been detected is less than the certain period of time, the screen of the display 5 need not be brightened even if the large movement of the object is detected. This prevents the brightness of the display 5 from being frequently changed in accordance with the presence or absence of a large movement of the object.

### Effects and Modification Examples

The effects of the stationary device 1 configured as described above will be described. In the stationary device 1 according to the embodiment described above, the user-operable part 31 provided on the upper part of the stationary device 1 is configured to emit light. In the stationary device 1 according to the embodiment described above, the optical sensor 22 is provided below the non-contact sensor 21. As a result, the optical sensor 22 is arranged farther away from the user-operable part 31 than the non-contact sensor 21, and thus, the detection result of the optical sensor 22 is prevented from being influenced by the light emitted in the user-operable part 31. Thus, according to the stationary device 1 according to the embodiment described above, the optical sensor 22 is more likely to exhibit the functions thereof. In other words, in the stationary device 1 according to the embodiment described above, the user-operable part 31 can be made to emit light without considering the influence on the optical sensor 22.

Since the non-contact sensor 21 is arranged above the optical sensor 22, the non-contact sensor 21 is arranged at a relatively high position in the stationary device 1. It is possible that some obstacle may be arranged in front of the stationary device 1, and by arranging the non-contact sensor 21 at a high position, the detection by the non-contact sensor 21 is prevented from being hindered by such an obstacle, whereby it becomes easier to accurately detect the movement of an object in front of the stationary device 1, and in particular, the user. Thus, according to the stationary device 1 according to the embodiment described above, the non-contact sensor 21 can easily exhibit the functions thereof.

In particular, in the embodiment described above, the optical sensor 22 is arranged below the display 5, and the non-contact sensor 21 is arranged above the display 5. As a result, the optical sensor 22 is arranged at a position farther away from the user-operable part 31, and the detection result of the optical sensor 22 is further prevented from being affected by the light emitted from the user-operable part 31. Furthermore, the non-contact sensor 21 is arranged at a higher position, and thus, the effect of obstacles can be further reduced.

In particular, in the embodiment described above, the optical sensor 22 is arranged in the enclosure part 16 between the outer frame 13 and the display 5 so as to overlap with the cover 14 when viewed from the front. As a result, the optical sensor 22 is arranged relatively close to the display 5. As described above, since the brightness of the display 5 is changed based on the output signal of the optical sensor 22, the brightness of the display 5 can be changed more appropriately in accordance with the illuminance around the display 5. The region of the enclosure part 16 between the outer frame 13 and the display 5 is a necessary region even if the sensors 21, 22 are not provided, and thus, there is no need to provide a separate location in the stationary device 1 for arranging the sensors 21, 22, and the stationary device 1 can be formed compactly.

In the stationary device 1 according to the embodiment described above, the non-contact sensor 21 and the optical sensor 22 are both arranged at the center in the left-right direction (horizontal direction) of the front surface 10a of the body 10 so as to intersect the plane Y. In this manner, by disposing the non-contact sensor 21 and the optical sensor 22 at the center in the left-right direction, movement of an object in front of the stationary device 1 and the brightness in front of the stationary device 1 are prevented from being detected in a biased manner.

In the stationary device 1 according to the embodiment described above, the body 10 is configured such that a part of it is positioned on a line segment connecting an arbitrary point of the user-operable part 31 and the light collecting part for the optical sensor 22. Thus, even when the user-operable part 31 emits light, the light is prevented from directly entering the light collecting part, and thus, the detection result of the optical sensor 22 can be further prevented from being affected by the light emitted in the user-operable part 31. In the stationary device 1 according to the embodiment described above, the outer frame 13 forms a protruding part that protrudes forward relative to the front surface of the cover 14, and the user-operable part 31 is arranged behind the optical sensor 22. As a result, when the user-operable part 31 emits light, the light is further unlikely to enter the light collecting part for the optical sensor 22, and thus, the detection result of the optical sensor 22 can be further prevented from being affected by the light emitted in the user-operable part 31.

The outer frame 13 may be configured so as to protrude forward in the upper portion of the body 10 (i.e., above the optical sensor 22 described later) and to not protrude forward in other regions (such as the lower portion of the body 10).

Alternatively, the outer frame 13 may be configured to protrude radially outward from the sidewall 11a of the housing 11 constituting the side surface 10c of the body 10. Thus, in this case, in the upper part of the body 10, the outer frame 13 constitutes a protruding part that protrudes radially outward from the part of the body 10 around the outer frame 13 (such as the sidewall 11a of the housing 11). The outer frame 13 may be configured to protrude upward (i.e., radially outward) in the upper part of the body 10 (i.e., above the optical sensor 22), and not protrude radially outward in other regions (such as the lower part of the body 10). The protruding direction of the outer frame 13 is not limited to forward and upward, and may be any direction as long as it is possible to suppress the detection result of the optical sensor 22 from being affected by the light emission in the user-operable part 31.

Moreover, in the stationary device 1 according to the embodiment described above, the light emission of the user-operable part 31 is controlled based on the output signal of the non-contact sensor 21. In particular, in the embodiment described above, when it is determined that an object has moved from within a predetermined bed region to outside the bed region based on the output signal of the non-contact sensor 21, the light emission mode of the user-operable part 31 is changed. As a result, when movement of an object is detected by the non-contact sensor 21, since the light emission mode of the user-operable part 31 arranged in a conspicuous position on the upper part of the stationary device 1 is changed, the user can easily visually confirm that the detection of the movement is being performed correctly.

Though preferred embodiments according to the present disclosure have been described above, the present disclosure is not limited to these embodiments, and various modifications and changes can be made within the scope of the claims.

## Claims

1. A stationary device (1) having a display (5), the stationary device (1) comprising:
a body (10) in which the display (5) is provided so as to be viewable from the front;
an user-operable part (31) configured to emit light, provided in an upper region of the body (10);
a non-contact sensor (21) configured to detect an object without physical contact, provided in a front part of the body (10);
an optical sensor (22) configured to detect light, provided below the non-contact sensor (21) in the front part of the body (10) ; and
a controller (40) which receives output signals of the non-contact sensor (21) and the optical sensor (22), wherein
the controller (40) controls a function of the stationary device (1) based on the output signal of the non-contact sensor (21), and controls the brightness of the display (5) based on the output signal of the optical sensor (22).

2. The stationary device (1) according to claim **1,** wherein the optical sensor (22) and the non-contact sensor (21) are arranged in the horizontal center of a front surface of the body (10).

3. The stationary device (1) according to claim 1 or 2, wherein the optical sensor (22) is arranged below the display (5) in the front part of the body (10), and the non-contact sensor (21) is arranged above the display (5) in the front part of the body (10).

4. The stationary device (1) according to claim 3, wherein
the display (5) is rectangular,
the body (10) has, on the front surface thereof, an annular outer frame which extends along an outer periphery of the body (10), and an enclosure part provided between the display (5) and the outer frame which surrounds the display (5), and
the optical sensor (22) and the non-contact sensor (21) are arranged so as to be overlapped by the enclosure part when viewed from the front.

5. The stationary device (1) according to claim 3, wherein
the display (5) is rectangular,
the body (10) has a circular cover (14) arranged on the front surface of the display (5), the circular cover extending outward from an outer periphery of the display (5), and
the optical sensor (22) and the non-contact sensor (21) are arranged so as to be overlapped by the cover (14) when viewed from the front.

6. The stationary device (1) according to any one of claims 1 to 5, wherein the body (10) is configured such that a part of the body (10) is positioned on a line segment connecting an arbitrary point of the user-operable part (31) and the optical sensor (22).

7. The stationary device (1) according to claim 6, wherein the body (10) has a protruding part on a periphery of the front surface of the body (10) above the optical sensor (22), and the protruding part protrudes forward or upward relative to a portion of the body (10) around the protruding part.

8. The stationary device (1) according to claim 6 or 7, wherein the user-operable part (31) is arranged above the body (10) and rearward of the optical sensor (22).

9. The stationary device (1) according to any one of claims 1 to 8, wherein the controller (40) controls light emission of the user-operable part (31) based on the output signal of the non-contact sensor (21).

10. The stationary device (1) according to claim 9, wherein the controller (40) is configured to:
pre-set a region within a detection range of the non-contact sensor (21); and
change a light emission pattern of the user-operable part (31) when an output signal of the non-contact sensor (21) indicates that an object has moved from within the region to outside the region.

11. The stationary device (1) according to any one of claims 1 to 10, wherein when an illuminance in front of the stationary device (1) is below a predetermined threshold based on the output signal of the optical sensor (22), the control part (40) brightens the display (5) in a case the output signal of the non-contact sensor (21) indicates relatively large movement of the object, as compared to when the output signal of the non-contact sensor (21) indicates relatively small movement or no movement of the object.

12. The stationary device (1) according to any one of claims 1 to 11, wherein
the body (10) further comprises a cover (14) which is arranged on a front surface of the display (5), the cover extending outwards from an outer periphery of the display (5), and
the cover (14) comprises a first coating layer applied such that regions corresponding to the display (5) and the optical sensor (22) are open, and a second coating layer applied to a region corresponding to the optical sensor (22), the second coating layer having a higher transmittance for infrared lights and certain frequencies of visible lights than the first coating layer.
